# EUROPEAN PATENT APPLICATION

(11) **EP 4 733 012 A1**
(43) Date of publication of application: **29.04.2026**
(21) Application number: 25210857.6
(22) Date of filing: 23.10.2025
(51) Int. Cl.: B25J 9/16

(54) **SYSTEM AND METHOD FOR AUTONOMOUS ANOMALY RESOLUTION IN AUTONOMOUS ROBOTIC SYSTEMS**

(30) Priority: 23.10.2024 US 202463710885 P
(71) Applicant: MacDonald, Dettwiler and Associates Inc., Brampton, Ontario L6Y 6K7 (CA)
(72) Inventor: Abu El Samid, Nader, Brampton, L6Y 6K7 (CA); Rososhansky, Michael, Brampton, L6Y 6K7 (CA); Niksirat, Parna, Brampton, L6Y 6K7 (CA); Stewart Langley, Christopher, Brampton, L6Y 6K7 (CA)
(74) Representative: Mewburn Ellis LLP

(57) **Abstract**

A method of autonomous anomaly detection and resolution in a remotely operated device system is provided. The method includes: performing an autonomous task with a remotely operated device in a space segment; collecting telemetry or imagery during performance of the autonomous task; providing the telemetry or imagery to an autonomy processing device; detecting an off-nominal event in the telemetry or imagery with an anomaly detection software module and sending anomalous event data to an executive runtime scripting engine; responding to the anomalous event data by automatically executing a response script for the anomalous event data by the executive runtime scripting engine to determine a command, the response script including scripting logic encoding a corrective response; sending the command from the autonomous processing device to a controller; and executing a corrective response to the anomalous event data by controlling the autonomous machine with the controller using the command.

## Description

### Technical Field

The following relates generally to robotic systems, and more particularly to space robotic systems.

### Introduction

Current approaches to the performance of robotic tasks by space robotic systems rely heavily on the input of human operators on ground. For example, nominal contact operations on the International Space Station are currently performed by ground operators who monitor the operation for any anomalies or potential collisions and correct capture misalignments using downlinked video.

In space environments, loss of signal (LOS) periods prevent direct communication between human operators and robotic systems that are needed for proper and safe functioning under existing models. It is desired, therefore, to enable robotic systems to perform autonomously during LOS periods in a manner that is safe and efficient. This is particularly so as the desired to operate robotic systems further from Earth (e.g., in lunar orbit) increases.

In an operating environment where a failure to detect and recover from potential hazards leads to a certain level of loss of system function, anomaly detection is crucial in identifying and predicting unexpected behaviour. Existing anomaly detection solutions for spacecraft telemetry are completed by ground statistical analysis and mainly include checking whether values stay inside pre-defined regions. In real-time during operations, detecting anomalies often relies on expert engineering judgement and familiarity with what is expected based upon preparatory analysis performed. Further, sometimes, more analyst effort is required for anomaly characterization to recreate the anomaly in simulation prior to (or during) the diagnosis process.

It is also recognized that such challenges may also apply to other remotely controlled or operated devices or systems, including those with autonomous machines.

Accordingly, there is a need for an improved system and method for autonomous resolution of anomalies in robotic systems and other remotely controlled or operated systems that overcomes at least some of the disadvantages of existing systems and methods.

### Summary

A method of autonomous anomaly detection and resolution in a remotely operated device system is provided. The method includes: performing an autonomous task with a remotely operated device disposed on a platform in a space segment; collecting sensor telemetry or visual imagery with one or more sensors or an imaging system, respectively, in the space segment during performance of the autonomous task; providing the sensor telemetry or visual imagery to an autonomy processing device in the space segment configured to execute one or more anomaly detection software components; detecting an off-nominal event in the sensor telemetry or visual imagery with the one or more anomaly detection software modules and sending anomalous event data of the off-nominal event to an executive runtime scripting engine executed by the autonomy processing device; responding to the anomalous event data by automatically executing an anomalous event response script for the anomalous event data by the executive runtime scripting engine to determine a command, the anomalous event response script including scripting logic encoding at least one corrective response; sending the command from the autonomous processing device to a controller unit for execution by the remotely operated device; and executing a corrective response to the anomalous event data by controlling the remotely operated device with the controller unit using the command.

In an embodiment, the anomalous event response script encodes at least two different responses to the anomalous event data, the sensor telemetry or visual imagery includes context data, and the executive runtime scripting engine determines which of the at least two responses to execute based upon the context data and the anomalous event data.

In an embodiment, the at least two different responses include a first response and a second response, the context data includes first context data corresponding to a first context or second context data corresponding to a second context, and the executive runtime scripting engines executes the first response when the first context data is received and the second response when the second context is received.

In an embodiment, the one or more anomaly detection software modules include a collision avoidance algorithm configured to detect potential collision situations in real-time.

In an embodiment, the collision avoidance algorithm is a model-based collision avoidance algorithm.

In an embodiment, the one or more anomaly detection software modules include a vision-guided motion (VGM) module configured to perform vision-guided fine alignment maneuvers to correct pose alignments to a fixed target computed using a machine vision camera system.

In an embodiment, the one or more anomaly detection software modules include a real-time health monitoring (RTHM) module configured to monitor and identify off-nominal performance in the sensor telemetry or visual imagery.

In an embodiment, the one or more anomaly detection software modules include an autonomous sensing of unexpected obstacles (ASUO) module configured to scan an environment in which the autonomous task is being performed, compare the scanned environment against a 3D model of an expected environment, and output the anomalous event data when a difference between the scanned environment and the 3D model is detected.

In an embodiment, the sensor telemetry or visual imagery includes imaging system telemetry including images from one or more cameras, and the one or more anomaly detection software modules include a worksite surveyor module configured to perform automated visual inspection of a current configuration of a worksite to be operated on by the remotely operated device using the imaging system telemetry and output the anomalous event data when the current state of the worksites does not match an expected configuration of the worksite.

In an embodiment, the sensor telemetry includes any one or more of actuator control unit telemetry, imaging system controller telemetry, motor controller telemetry, motor controller telemetry, robotic arm controller telemetry, temperature telemetry, voltage telemetry, current telemetry, force telemetry, and lidar data.

In an embodiment, the remotely operated device system is a space robotic system, the remotely operated device is an autonomous robotic device, and the autonomous task is a robotic task.

In an embodiment, the remotely operated device is a robotic arm and the autonomous task is a grapple task or a release task using the robotic arm.

A system for autonomous anomaly detection and resolution in a remotely operated device system is also provided. The system includes: a remotely operated device configured to perform an autonomous task; one or more sensors or imaging systems configured to collect sensor telemetry or visual imagery, respectively, during performance of the autonomous task; an autonomy processing device comprising: one or more anomaly detection modules configured to detect an off-nominal event in the sensor telemetry or visual imagery and outputting anomalous event data for the off-nominal event; a scripting engine configured to: execute an anomalous event response script corresponding to the anomalous event data to determine a command, the anomalous event response script including scripting logic encoding at least one corrective response; send the command to a controller device; and the controller device configured to execute a corrective response to the anomalous event data by controlling the remotely operated device with the controller device using the command.

In an embodiment, the anomalous event response script encodes at least two different responses to the anomalous event data, the sensor telemetry or visual imagery includes context data, and the executive runtime scripting engine determines which of the at least two responses to execute based upon the context data and the anomalous event data.

In an embodiment, the at least two different responses include a first response and a second response, the context data includes first context data corresponding to a first context or second context data corresponding to a second context, and the executive runtime scripting engines executes the first response when the first context data is received and the second response when the second context is received.

In an embodiment, the one or more anomaly detection software modules include a collision avoidance algorithm configured to detect potential collision situations in real-time.

In an embodiment, the collision avoidance algorithm is a model-based collision avoidance algorithm.

In an embodiment, the one or more anomaly detection software modules include a vision-guided motion (VGM) module configured to perform vision-guided fine alignment maneuvers to correct pose alignments to a fixed target computed using a machine vision camera system.

In an embodiment, the one or more anomaly detection software modules include a real-time health monitoring (RTHM) module configured to monitor and identify off-nominal performance in the sensor telemetry or visual imagery.

In an embodiment, the one or more anomaly detection software modules include an autonomous sensing of unexpected obstacles (ASUO) module configured to scan an environment in which the autonomous task is being performed, compare the scanned environment against a 3D model of an expected environment, and output the anomalous event data when a difference between the scanned environment and the 3D model is detected.

In an embodiment, the sensor telemetry or visual imagery includes imaging system telemetry including images from one or more cameras, and the one or more anomaly detection software modules include a worksite surveyor module configured to perform automated visual inspection of a current configuration of a worksite to be operated on by the remotely operated device using the imaging system telemetry and output the anomalous event data when the current state of the worksites does not match an expected configuration of the worksite.

In an embodiment, the sensor telemetry includes any one or more of actuator control unit telemetry, imaging system controller telemetry, motor controller telemetry, motor controller telemetry, robotic arm controller telemetry, temperature telemetry, voltage telemetry, current telemetry, force telemetry, and lidar data.

In an embodiment, the remotely operated device system is a space robotic system, the remotely operated device is an autonomous robotic device, and the autonomous task is a robotic task.

In an embodiment, the remotely operated device is a robotic arm, and wherein the autonomous task is a grapple task or a release task using the robotic arm.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a space robotic system including autonomous anomaly resolution, according to an embodiment;
Figure 2 is a block diagram of the autonomy processing device of Figure 1, according to an embodiment;
Figure 3 is a block diagram of the anomaly detection software components of Figure 2, according to an embodiment;
Figure 4 is a block diagram of the executive runtime of Figure 2, according to an embodiment;
Figure 5 is a block diagram of a data processing pipeline for autonomous anomaly resolution in the system of Figure 1, according to an embodiment;
Figure 6 is a block diagram of a free flyer drift management operation performed during free flyer capture by the system of Figure 7, according to an embodiment;
Figure 7 is a block diagram of a space robotic system for performing autonomous free flyer capture, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to robotic systems, and more particularly to autonomous anomaly resolution in space robotic systems.

The present disclosure provides system and methods for autonomous anomaly detection and resolution in a remotely operated device system, such as a space robotic system, wherein the device is configured to perform autonomous tasks.

Those skilled in the art will appreciate that, although the embodiments described in the present disclosure are set forth in the context of robotic systems, the disclosed systems and methods for autonomous anomaly resolution are not so limited. The principles and techniques described herein may be implemented in connection with any remotely operated or controllable platform or device, including, without limitation, robotic systems, satellites, planetary rovers, unmanned aerial or marine vehicles, remote-operated industrial machinery, or other systems capable of receiving and executing remote instructions. Accordingly, the scope of the present disclosure should not be construed as being limited to robotic systems alone.

As used herein, the term "remotely operated device" or "remotely operated system" encompasses systems such as satellites, planetary rovers, unmanned aerial vehicles, robotic systems, industrial machinery, or other platforms that are capable of receiving and executing commands from a remote operator, whether or not the device or system further includes autonomous functionality. For example, while example embodiments of the present disclosure describe autonomous robots/machines performing autonomous operations, the autonomous anomaly resolution system may also be effectively utilized for resolving anomalies in non-autonomous (or semi-autonomous) remotely operated devices as well.

As used herein, the term "free flyer" in intended to encompass any spacecraft/vehicle or spaceborne article/object that is configured to move and operate independently in space without a fixed mechanical connection to another spacecraft, space station, or supporting structure. This term includes, without limitation, satellites, scientific probes, deployable vehicles, and detachable modules or payloads that function in a free flying state. The free flyer may enter a state, either transient or persistent, during which active control of its orbital position, attitude, or trajectory is not maintained.

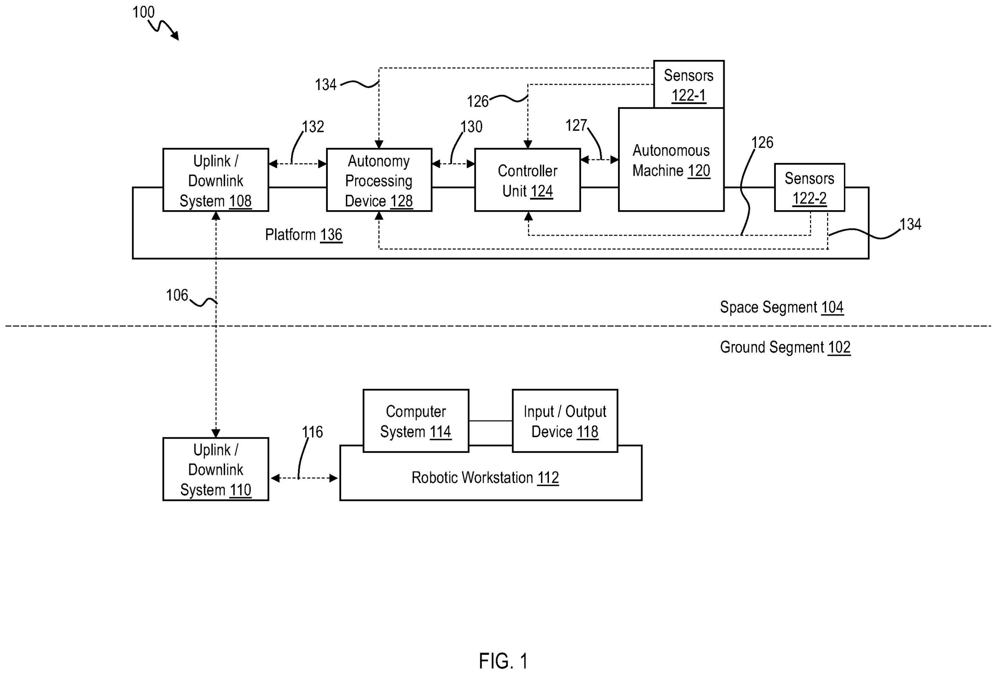

Referring now to Figure 1, shown therein is a robotic system 100, according to an embodiment. The robotic system 100 is a space-based robotic system. The system 100 may also be used in non-space contexts where the autonomous machine is remote, where human intervention is complex, challenging, or impractical.

The robotic system 100 may be a robotic servicing system. The robotic servicing system may be configured to provide mechanical (e.g., payload manipulation, torquing) and electrical services (e.g., power transfer, data transfer) through one or more autonomous robots or autonomous machines to a payload (e.g., tool, system, machine, or object with which the autonomous machine interfaces). The robotic system 100 is configured to perform one or more types of autonomous operations.

The system 100 includes a ground segment 102 and a space segment 104. The ground segment 102 and space segment 104 are in communication with one another via communication link 106.

The communication link 106 includes an uplink and downlink. The manner of uplink and downlink, including any necessary hardware, software, and infrastructure, may be any suitable manner of such communication known in the art. Ground segment 102 may use the uplink to send commands or instructions to space segment 104 and to receive data (e.g., real-time telemetry) from space segment 104 via the downlink.

Space segment 104 includes an uplink/downlink system 108 which includes any necessary hardware and software for sending or receiving data over communication link 106. This may include a downlink unit and an uplink unit (not shown).

The nature of communication link 106 between ground segment 102 and space segment 104 may cause periods during which communication of data along communication link 106 is possible (acquisition of signal, or AOS) and periods during which communication of data along communication link 106 is not possible (loss of signal, or LOS). During periods of LOS, traditional approaches of controlling the robotic system 100 and responding to anomalous or off-nominal events that require human involvement from the ground segment 102 are not possible. Accordingly, the autonomous anomaly resolution techniques described in the present disclosure are of particular importance to maintain performance of the robotic system 100 during LOS periods.

The ground segment 102 includes an uplink/downlink system 110 for transmitting and receiving signals via communication link 106. The uplink/downlink system 110 includes any necessary hardware and software for sending or receiving data over communication link 106.

The ground segment 102 further includes a robotic ground operator station 112 (or robotic workstation 112). The robotic workstation 112 communicates with the uplink/downlink system 110 via a network connection 114 to send and receive data to and from the space segment 104.

The operator station 112 includes one or more computer systems 114 including processors and memories storing processor executable instructions and one or more input/output devices 118 for enabling operator interaction with the computer system 114 and control of the space segment 104 components. For example, a display device of the input/output device 118 may display a user interface to the operator. The computer system of ground segment 102 executes ground segment software for performing the functions of the operator station 108. The ground segment software may include an on-orbit telemetry data assessment module. The on-orbit telemetry data assessment module 110 includes a user interface module for enabling an operator user to interact with the system 100 (e.g., through displaying data from the space segment 104 and receiving input on data to be sent to the space segment 104).

The space segment 104 includes an autonomous machine 120 (or autonomous robot 120) for performing autonomous robotic functions and operations. The autonomous robot 120 in system 100 may be any type of machine, device, or system that is capable of performing fully autonomous operations (whether exclusively or non-exclusively) and that may utilize or benefit from the autonomous methods and operations described herein. For example, the autonomous machine 120 may be a robotic manipulator (or arm in the case of a serial manipulator) or a rover. The system 100 is configured to perform a task with autonomous machine 120. The task may be composed of a partially ordered sequence of actions.

In an embodiment where the autonomous machine 120 is a robotic manipulator, the robotic manipulator may include an end effector (or end of arm tool) coupled to a free end of the robotic manipulator. The robotic manipulator manipulates, moves, and positions the end effector. The end effector may be an end effector that can be picked up and removed by the robotic manipulator.

The space segment 104 includes a plurality of sensors 122-1, 122-2 disposed on and in the environment of the autonomous machine 120 for acquiring telemetry data about the execution of robotic tasks by the autonomous machine 120. This may include sensors 122-1 that are coupled to autonomous machine 120 and sensors 122-2 that are not coupled to robotic device 122-2. The sensors 122 may be of multiple sensor types. Example sensors 122 include actuator control units, camera controllers, motor controllers, and arm controllers. Example sensor data that may be collected includes temperature, voltage, current, force, lidar data, etc. It will be understood that the type and positioning of sensors 122-1, 122-2 may vary for different types of robotic devices 120.

The sensors 120-1, 120-2 include at least one camera system for imaging an environment that the autonomous machine 120 is in. The camera system provides image data to one of or both the controller unit 124 and the autonomy processing device 128 (described further below) that allows the autonomous machine 120 to be positioned in the environment (e.g., positioning an end effector on a manipulator). The camera system also records video data during the performance of the robotic operation by the autonomous machine 120. It will be understood that multiple camera systems may be present at different locations (on the autonomous machine 120 or independent therefrom) and record images or video of various aspects of the robotic operations.

In some embodiments, the sensors 120-1 may include a camera system configured to capture image data of a machine vision marker present on a payload to be interacted with by the autonomous machine 120 (e.g., a payload to be moved or serviced by the device 120). The machine vision marker may encode information about the marker or payload (e.g., identifying information, physical properties, etc.). The captured image data may then be processed by a processing device to identify the machine vision marker and/or the payload. In some cases, the identity or other information obtained from processing the image data may be used by the system 100 to determine what operation the autonomous machine 120 will perform or to confirm that the payload is the correct payload or payload type to receive the service of the robotic device.

The space segment 104 further includes an autonomous machine controller unit 124 (or controller 124, control device 124). The controller unit 124 executes control software for controlling movement of the autonomous machine 120. Control device 124 may be implemented at a single device or across a plurality of devices. The controller 124 receives sensor data 126 from sensors 122-1, 122-2. The controller unit 124 communicates with autonomous machine 120 via communication link 127. The controller 124 detects low-level faults and recovers the fault, if possible, at that level of abstraction. If fault recovery at that level of abstraction (i.e., functional layer) is not possible, the fault signature is sent to the autonomy processing device 128 (i.e., executive layer) to perform corresponding recovery.

In an embodiment where the autonomous machine 120 is a manipulator, the controller unit 124 may include manipulator control software, vision software, and end effector control software. The manipulator control software, when executed by a processor of the controller unit 124, controls articulation and movement of the manipulator, such as through controlling the articulation of joints. The manipulator control software may receive sensor data from sensors 122-1 in or on the manipulator and other input data, process the input data, and generate control instructions based on the processing and send the control instructions to the manipulator for execution. The vision software, when executed by a processor of the controller unit 124, processes image data acquired by vision components in the space segment 104, such as cameras. Processing may include, for example, processing image data of a machine vision marker on a payload or determining a pose of the marker or payload (e.g., via executing a pose estimation algorithm). The end effector control software, when executed, controls the operation of the end effector. This may include operations such as grappling and provision of auxiliary services (e.g., torque transfer, power, data).

The space segment 104 further includes an autonomy processing device 128. The autonomy processing device 128 may also be referred to as an executive robotic control processor. The autonomy processing device 128 is configured to execute encoded process-executable instructions for monitoring and controlling performance of autonomous operations by the autonomous machine 120. Examples of monitored robotic operations may include the autonomous machine 120 grappling and manipulating a payload or the autonomous machine 120 maneuvering from one location to another.

The autonomy processing device 128 is in communication with controller 124 via communication link 130. The autonomy processing device 128 may process data received from controller device 124. The autonomy processing device 128 is in communication with uplink/downlink system 108 via communication link 132. The autonomy processing device 128 may process data received from uplink/downlink system 108. The autonomy processing device 128 receives sensor data (telemetry) 134 from sensors 122-1, 122-2 collected during performance of a robotic operation or task by the autonomous machine 120.

The autonomy processing device 128 includes one or more processors for executing software components (or modules) and one or more data storage devices (e.g., memory) for storing data. The autonomy processing device 128 is configured to execute an autonomous anomaly detection and response system. The autonomy processing device 128 analyzes the telemetry data 134 for anomalous or off-nominal events and determines a next action of the autonomous machine 120 in response. The next action is communicated to the controller unit 124 for execution at the autonomous machine 120. The autonomy processing device 128 is configured to issue recovery from anomalous events given the context of the event. Context (also referred to as context information, contextual information, or context data) may include information about the plan or the states of the external environment that are unknown to the controller 124 (and the internal environment, i.e., information about internal systems of the overall system 100). Put another way, controller 124 has been told "what" and knows "how", but only autonomy processing device 128 knows "why" or "why now". The context also includes information about the internal systems of the overall system 100 (which may be referred to as internal environment).

The autonomy processing device 128 provides flexibility to respond to off-nominal or anomalous events. The autonomy processing device 128 is configured to allow the response to off-nominal or anomalous events to change with context. In some cases, the autonomy processing device 128 might not fully exploit context awareness to adjust anomaly detection thresholds or prioritize responses based on the mission's criticality or current state.

The context information may be provided by an external agent device or may be part of the script for responding to the anomalous event.

In an embodiment, context information (or contextual information or simply context), which is used to determine response to an anomalous event, may come from an external agent. For example, another processing device (e.g., on platform 136) may provide context data about structure in the environment of the autonomous machine 120 (e.g., a solar array on platform 136 is in a particular configuration).

In another embodiment, context information may be part of a script for responding to an anomalous event that is executed by the autonomy processing device 128. For example, the autonomy processing device 128 knows the autonomous machine 120 is transporting a particular payload, but the autonomous machine 120 only knows that it is moving with the end effector closed.

An example of how a response to anomalous event data may change based upon context data will now be described. In this example, the autonomous machine 120 is operative on platform 136 and may or may not be in proximity to other structure. While the autonomous machine 120 knows its own configuration, the location of the nearby structure is contextual knowledge (i.e., context data). The context information may thus indicate whether a problem (anomalous event, such as a potential collision situation) is in free space (away from structure) or in proximity (near structure). The autonomy processing device 128 is configured to respond to the anomalous event in different ways according to the context information. Such context-dependent responses may be encoded in one or more scripts referenced by the autonomy processing device 128 to determine how to respond to the anomalous event. If the context data indicates the problem is in free space, the script indicates that the autonomous machine 120 is to be stopped and the task aborted (as it is safe to do so). If the context data indicates the problem is in proximity, the script indicates that the autonomous machine 120 is to be stopped and backed away from structure until the autonomous machine 120 is in free space, and then the task is aborted.

The autonomous machine 120, controller 124, autonomy processing device 128, and uplink/downlink system 108 are coupled to platform 136. In a space-based application, the platform 136 may be a satellite or spacecraft bus, or vehicle platform (e.g., on a rover or the like). In some embodiments, autonomous machine 120, controller 124, and autonomy processing device 128 may be coupled to different platforms in the space segment 104.

Example operation of the system 100 will now be described. The system 100 is configured to perform a task with autonomous machine 120. The autonomy processing device 128 verifies logical entry conditions for the task are verified. Actions (sub-tasks or components of the task) are automatically executed by the autonomy processing device 128 in the sequence defined by the task. The autonomy processing device 128 verifies each action in the task for completion against success criteria using telemetry 134 before proceeding to the next step. Throughout the execution of the task, when the autonomous machine 120 is in motion, the autonomy processing device 128 uses real time telemetry 134 to drive a simplified kinematic model of the platform 136 environment and any relevant keep-out zones. If clearance drops below a certain threshold, all motion of the robotic device 128 is brought to a stop. The autonomy processing device 128 may attempt to replan the trajectory or path and continue the task. Throughout the execution of the task, system telemetry 134 is logged if system anomalies (e.g., off-nominal events detected by one or more anomaly detection algorithms) require post mission review or analysis by the ground segment 102 (e.g., at workstation 108).

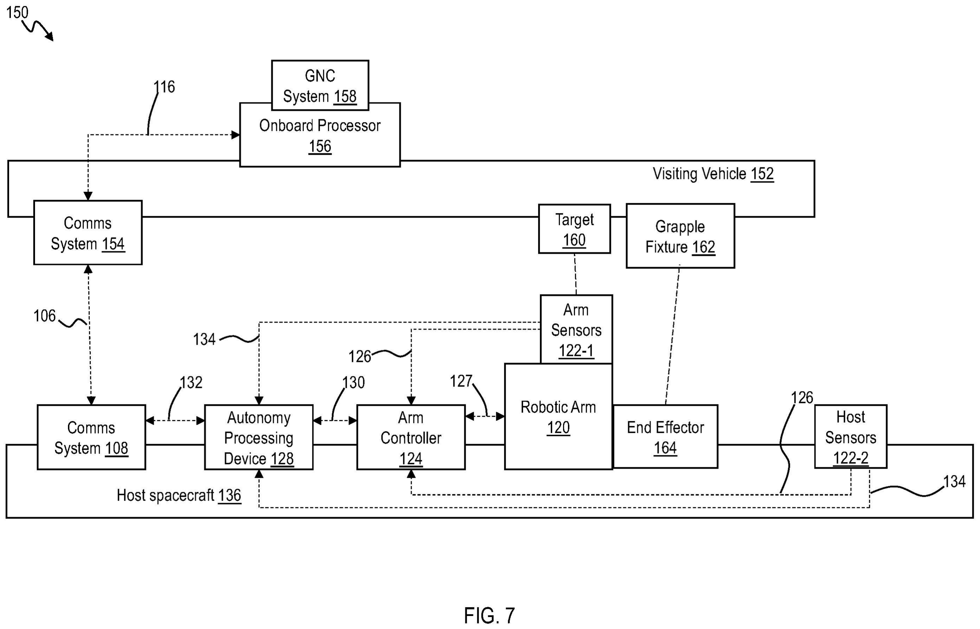

Referring now to Figure 7, shown therein is a space robotic system 150 for performing autonomous capture of a free flyer vehicle, according to an embodiment. The system 150 is an extension or variation of system 100 of Figure 1 applied to the task of autonomous free flyer capture.

The system 150 includes host spacecraft 136 and visiting vehicle 152. In other embodiments, the host spacecraft 136 may be the active vehicle. Generally, the system 100 and the autonomous free flyer capture concepts described herein may apply to any cooperative case in which one or the other of the vehicles is performing proximity operations. The host spacecraft 136 is an example of platform 136 of Figure 1.

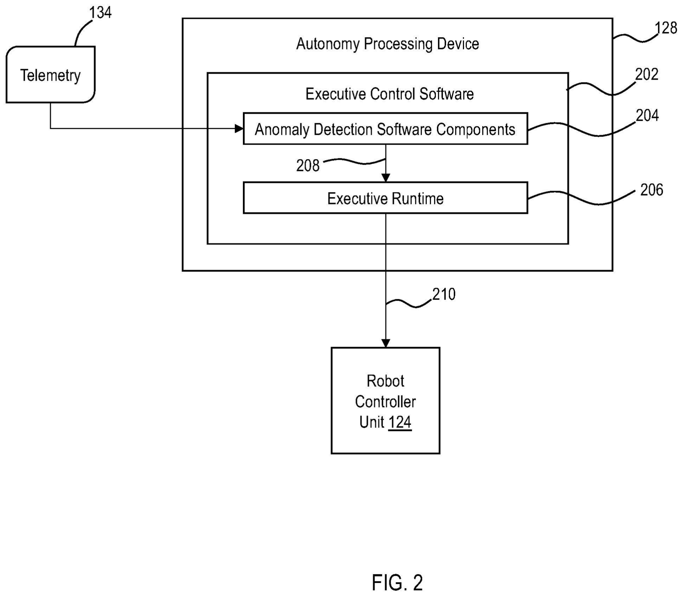

Referring now to Figure 2, shown therein is the autonomy processing device 128 of Figure 1 in further detail, according to an embodiment.

The autonomy processing device 128 executes executive control software 202. The executive control software 202 includes anomaly detection software components (anomaly detection algorithms) 204 and an executive runtime software component 206.

The autonomy processing device 128 uses the anomaly detection algorithms to analyze the telemetry data 134 and detect anomalies corresponding to anomalous or off-nominal events. Anomalous event data 208 characterizing a detected anomalous event is provided to the executive runtime 206, which determines a next action of the autonomous machine 120 and sends the next action as one or more commands 210 to the controller 124 for execution by the autonomous machine 120. The responses to anomalies encoded in the executive runtime 206 may emphasize bringing the system 100 to a safe state and back on track. Responses to anomalous events are preestablished and encoded in scripts such that recovery actions are pre-planned to execute automatically upon detection of the anomaly.

The autonomy processing device 128 may be configured to quantify and manage uncertainty in sensor data 134 and anomaly detection results (uncertainty management). This may be particularly advantageous in space environments where sensor data can be noisy or incomplete.

In some embodiments, the autonomy processing device 128 is configured to implement a sophisticated recovery action decision-making process that evaluates multiple courses of action during anomaly detection. In some embodiments, the autonomy processing device 128 may be configured to perform, for example along with controller 124, autonomous reconfiguration based on an output or determination of the anomaly detection process by the autonomy processing device 128. For example, the autonomy processing device 128 may autonomously reconfigure one or more operational parameters of the autonomous machine in response to detected anomalies. Such autonomous reconfiguration may support, for example, autonomous repair for self-healing.

In some embodiments, autonomy processing device 128 uses machine learning models that can adapt in real-time to new or unforeseen conditions without human intervention. In some embodiments, the autonomy processing device 128 may be configured to perform predictive maintenance and analytics for forecasting potential anomalies before they occur based on historical data.

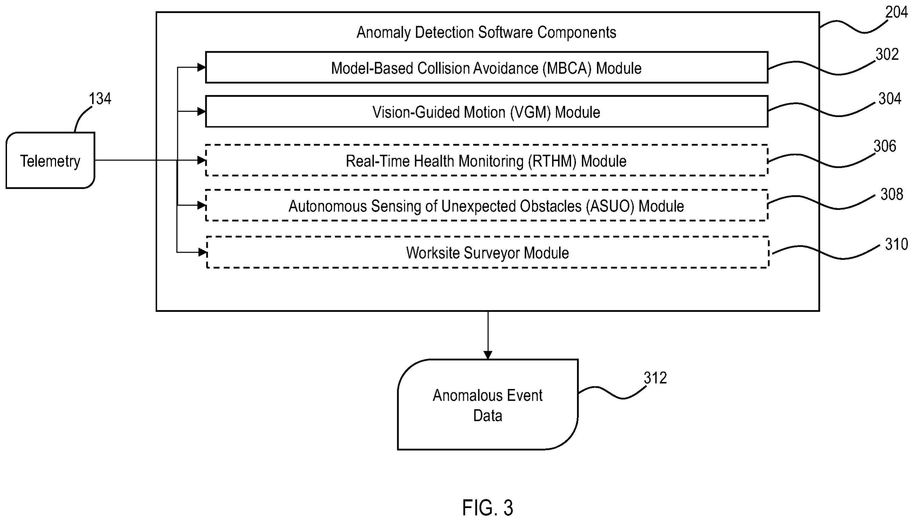

Referring now to Figure 3, shown therein are the anomaly detection software components 204 of Figure 2, according to an embodiment.

Anomaly detection software components 204 include a collision avoidance module 302 and a vision-guided motion (VGM) module 304. The anomaly detection software components 204 may also include a real-time health monitoring (RTHM) module 306, an autonomous sensing of unexpected obstacles (ASUO) module 308, and a worksite surveyor module 310.

The modules 302-310 receive telemetry data 134 as input and generate anomalous event data 312 characterizing detected anomalous events as output.

The collision avoidance module 302 runs a collision avoidance algorithm. In an embodiment, the collision avoidance algorithm is a model-based collision avoidance algorithm ("MBCA"). The collision avoidance algorithm 302 is configured to detect Potential Collision Situations (PCS) in real-time.

A potential collision situation (PCS) is defined as a situation where there is a credible risk of unintended contact in the real world unless corrective action is taken. A collision has not yet taken place.

A collision may be defined as the moment of unintended contact between two objects in the real world (e.g., autonomous machine 120 with a payload, structure, or interface, or a payload being manipulated by autonomous machine 120 with another payload, structure, or unintended interface).

The desired outcome of the collision avoidance module 302 is safety assurance during movement of the autonomous machine 120. The collision avoidance module 302 runs as the autonomous machine 120 is in motion.

The collision avoidance module 302 performs collision detection by comparing current autonomous machine 120 location and orientation (from device telemetry 120) with a known and up-to-date model of the environment. The collision avoidance module 302 may check a planned path for potential collisions with both self and the environment using known 3D geometry of the environment (e.g., of platform 136). The collision avoidance module 302 may also use telemetry data on equipment states such as the current (i.e., real time) pose of articulated structures (e.g., solar arrays or antennas on platform 136). The collision avoidance module 302 outputs a go or no-go decision to continue with the maneuver.

The collision avoidance module 302 uses real-time telemetry 134, computes forward kinematics on 3D models of the autonomous machine 120 and the environment, and then checks the clearance between the models to ensure adequate clearance is maintained. If the clearance falls below a clearance threshold, the autonomous machine 120 is commanded to stop and a PCS is flagged. The flagged PCS in considered anomalous event data 312 and is sent to the executive runtime 206.

In an embodiment, the collision avoidance module 302 outputs a PCS flag where a PCS is detected. The collision avoidance module 302 outputs a PCS flag if a clearance is found below the clearance threshold. A stop motion command is sent to the controller unit 124 for safety and the executive runtime 206 is informed of the PCS.

In an embodiment, the collision avoidance module 302 uses collision capsules as the primitive representation of the 3D models. In another embodiment, a precomputed voxel map is created which represents the static structures, and spheres are used as primitives for all moving or relocatable bodies in the environment. In another embodiment, a combination of voxel, spheres, and collision capsules are used where collision capsules are used for self-collisions and spheres and the voxel map are used to monitor all other types of collisions.

The collision avoidance module 302 may use a "recovery" threshold which is smaller than a "trigger threshold" to allow the autonomous machine 120 to move back into safe space without completely disabling collision avoidance module 302. This avoids a situation where the autonomous machine 120 can enter a potential collision situation (PCS) but never leave. The recovery threshold may be chosen to be at a distance where the autonomy is no longer trusted to move the arm without operator supervision.

Referring now to the VGM module 304, the VGM 304 is configured to execute an algorithm for performing vision-guided fine alignment maneuvers to correct pose misalignments to a fixed target computed using machine vision camera systems (e.g., sensors 122-1, 122-2). The algorithm automatically adjusts for varying illumination and exposure. In an embodiment, the vision-guided fine alignment maneuvers may include incremental look look-and-move fine alignment maneuvers. In another embodiment, the vision-guided fine alignment maneuvers include closed-loop visual servoing.

In an embodiment, the VGM 304 may use a target-based pose estimation system (e.g., space vision marker system as described in PCT/CA2022/051860, which is hereby incorporated by reference in its entirety). The system includes a black and white target at a robotic interface, an illuminator and a filtered monochrome camera on the autonomous machine 120, and a target detection and pose estimation software running on a processing device in the space segment 104 (e.g., controller 124). Pose estimation is performed on the approach to the robotic interface (e.g., approach to grapple feature, such as a grapple fixture or natural grapple feature/point). In an embodiment, a look-and-move approach is employed, so that the autonomous machine 120 is stationary while the pose is being computed. The pose estimation may be particularly important in contact operations to correct for thermal and pressure deformations and to ensure that the autonomous machine 120 stays within a designated safe zone. The VGM 304 may alternatively use a non-target-based pose estimation system.

Inputs to the VGM 304 include telemetry 134 from a camera system (sensors 122-1) on the autonomous machine 120 (e.g., an end effector camera on a robotic arm) and target configuration data. In an embodiment (e.g., robotic arm grappling a payload), target configuration data may include position and orientation offset between a vision target (e.g., vision target 114) frame of reference and a mechanical grapple fixture (e.g., grapple fixture 116) frame. In an embodiment, target configuration data may include the size of the target if the system is being used over multiple scales. Such target configuration data may be relevant for a rover (autonomous machine 120) approaching a module. The VGM 304 outputs a 6 degrees of freedom (DOF) pose estimate of the target with respect to camera and a confidence indicator/error code.

Referring now to the RTHM module 306, the RTHM 306 is configured to monitor and identify off-nominal performance based on telemetry 134 from autonomous machine 120 and other subunits. In the case of a robotic arm, telemetry 134 may include, for example, motor currents and joint angles. In effect, the RTHM 306 monitors the telemetry 134 to determine whether the data stream looks healthy or not.

The RTHM 306 may receive telemetry 134 as input, analyze the telemetry 134, and output detected anomalous event data. Detected anomalous events (health events) are reported to the executive runtime 206. Anomalous event data may be provided to the executive runtime 206 as parameterized messages regarding the detected off-nominal. Detected health events may cause the RTHM 306 to raise error, caution, warning, or advisory messages (anomalous event data), which are communicated to the executive runtime 206.

In an embodiment, RTHM 306 may be implemented as an expert system. The expert system encodes known health rules and human domain knowledge into a decision-making agent. The agent takes on-orbit telemetry 134 and periodically checks the data 134 against its rules. The agent may also include the appropriate logic for deciding when to flag events, send warnings, halt operations, and the like. New rules and logic may be added to the agent if and when they become available.

In another embodiment, RTHM 306 may use machine-learning-based sequence prediction and anomaly detection. This approach may or may not be used along with an expert system. This RTHM 306 may include trained machine learning models configured to identify and classify known off-nominal events from telemetry data 134 and identify previously unseen off-nominal events. In some cases, logic may be implemented after an anomaly predictor and/or detector machine learning model. The logic may encode a sophisticated decision-making process that evaluates multiple courses of action subsequent to anomaly detection or prediction. The logic may be used to confirm that the outcome of the subsequent action is safe.

For identifying and classifying known off-nominal events (expected anomalies), RTHM 306 may use a trained sequence prediction model (e.g., instead of an expert system). For identifying previously unseen off-nominal events (unexpected anomalies), RTHM 306 may use an ML-based anomaly detection model to identify novel or "out of distribution" trends in the telemetry data 134, indicating previously unseen events.

In some embodiments, RTHM 306 may use one or more adaptive learning algorithms. The adaptive learning algorithms are machine learning models that can adapt anomaly detection algorithms over time based on new data or evolving environmental conditions without human intervention. In some embodiments, the RTHM 306 may include a learning component that refines its detection and response strategies based upon past anomalies and their outcomes. To perform this safely, some level of simulation environment may be incorporated or used that accurately represents the operational conditions and allows for testing of anomaly detection algorithms by the system itself.

Referring now to the ASUO module 308, the ASUO 308 is configured to identify discrepancies between a modelled world and the real world. "Real world' may be defined as the world as it actually exists in the present moment during an operation. Sensors are used to take measurements from the real world, which can then be used to estimate underlying states and to inform decision making. "Modelled world" may be defined as the world as it is represented digitally. The modelled world represents information that was known and verified at a particular point in time before the start of an operation. In an embodiment, the ASUO 308 uses lidar to scan the environment. The ASUO 308 compares the scanned environment against a 3D model of the expected environment. If unexpected lidar returns exist, or if no lidar returns are detected where something should exist, the ASUO 308 raises an error, caution, or warning (anomalous event data).

Referring now to the worksite surveyor module 310, the worksite surveyor 310 is a tool that performs automated visual inspection of worksites using images taken by one or more cameras/imagers (e.g., sensors 122-1, 122-2) prior to proximity operations.

A worksite may be defined as the volume around a robotic interface that is controlled by predefined keep-out zones.

The worksite surveyor 310 performs automated visual inspection of worksites (e.g., a grapple fixture) using images taken by one or more cameras prior to proximity operations. The worksite surveyor 310 ensures that the current worksite configuration matches the expected configuration. This function is traditionally performed manually by human operators viewing downlinked video.

Given one or more images, knowledge of worksite geometry, and lighting conditions, the worksite surveyor 310 determines if a worksite matches the configuration expected for plan validation. The worksite surveyor 310 may generate and send a caution, warning, or emergency signal to the executive runtime 206 when something is off-nominal (anomalous event data 312).

In a first embodiment, the worksite surveyor 310 implements an explicit model comparison solution. In this approach, images taken at operations time are compared to a baseline model of the worksite to identify differences based upon visual appearance. If a large enough difference is detected, a warning or no-go signal is sent. Comparison methods may include a 3D reconstruction using survey images for comparison with a 3D CAD model, or a pixel or feature-wise comparison via image registration. Depending on the models and comparison method used, it may also be possible to infer the location and identity of image differences.

In a second embodiment, the worksite surveyor 310 implements a machine-learning-based comparison solution. This approach may perform the same type of comparison as the explicit model solution, but feeds the survey images and baseline into a trained machine learning model which outputs either a yes/no binary classification or similarity score. The model may be further configured to localize differences.

In a third embodiment, the worksite surveyor 310 implements an ML-based object matching solution. In this approach, a trained machine learning model performs object detection as bounding boxes and/or image regions and compares the result to a baseline model. If a large enough difference is detected, a warning or no-go signal is sent. The baseline model may be a full 3D model of the worksite for a pixel-to-pixel comparison of segmentation maps, for example, or a dictionary of known objects, their sizes, and relative locations for comparison with bounding boxes. This approach may perform a 1-to-1 comparison at the object level between survey and baseline images.

In a fourth embodiment, the worksite surveyor 310 implements an ML-based anomaly/outlier detection solution. In this approach, a machine learning model is trained to explicitly detect unknown, or "out-of-distribution" objects, image regions, or images. This approach could be used by itself or to supplement the ML-based comparison solution or ML-based object matching solution.

In some embodiments, the anomaly detection software components 204 may include an arm forward kinematics module (not shown).

The arm forward kinematics module runs a forward kinematics algorithm that calculates the position and orientation of the tip of a robotic arm (e.g., the end effector 164 of robotic arm 120 of Figure 7) using variables of the joints and linkages of the robotic arm connecting to the end effector. This may be referred to as forward kinematics data. The forward kinematics module computes the position of the end effector from specified values for joint parameters.

In some embodiments, the anomaly detection software components 204 include a free flyer drift management module (not shown).

The free flyer drift management module runs a drift management algorithm that uses outputs of the arm forward kinematics module and pose estimation algorithm (from VGM module 304). The drift management algorithm uses one or more predefined "capture boxes", each of which is a digital representation of a 6-DOF volume within which a grapple fixture (e.g., grapple fixture 162 of Figure 7) of a visiting vehicle (e.g., vehicle 152 of Figure 7) must stay or be during a specific stage of the free flyer capture operation. In an embodiment, the volume may be a 6-DOF volume or box. In another embodiment, the volume may be a 12 DOF volume/box (i.e., x, y, z, pitch, yaw, roll, plus all of the residual relative velocities of those DOFs). In an embodiment, the drift management algorithm uses a first (inner) capture box, a second (middle) capture box, and a third (total) capture box. The drift management algorithm detects, using the forward kinematics data and the pose estimation data, when the grapple fixture of the visiting vehicle leaves the capture box and the drift management module outputs a flag indicating the detection (e.g., as anomalous event data 312).

The anomaly detection software components 204 may also include a dynamics estimator module configured to estimate the relative orbital and attitude motion between the vehicles. In some embodiments, this function may reside within the pose estimation algorithm itself.

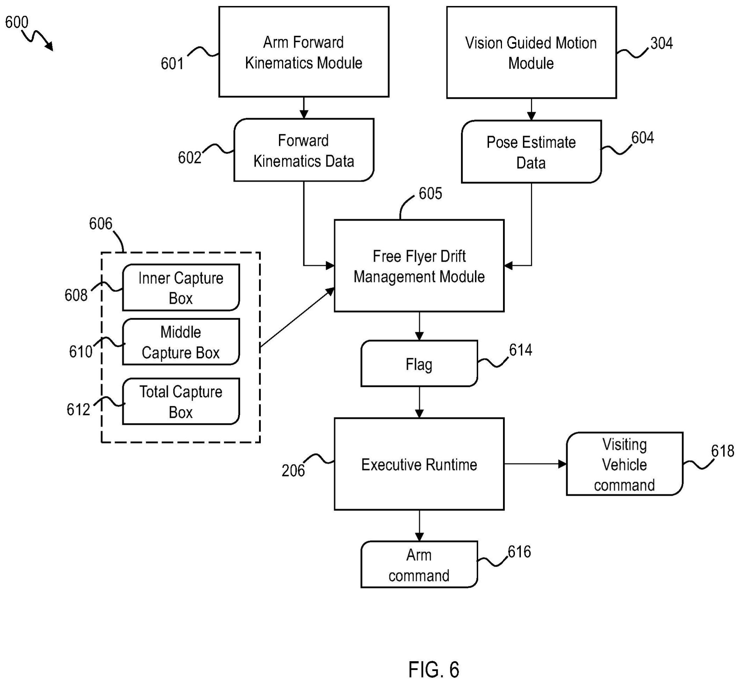

An example autonomous drift management operation 600 using a drift management module 605 (described above) is shown in Figure 6, according to an embodiment. The operation 600 may be implemented by the system 150 of Figure 7. The operation 600 may be implemented on an autonomy processing device, such as autonomy processing device 128 (or some combination of the autonomy processing device 128 and the controller 124).

The drift management operation 600 is performed during a free flyer capture operation.

During the free flyer capture operation, an arm forward kinematics module 601 (described above) generates forward kinematics data 602 indicating position and orientation of an end effector (e.g., the end effector 164) and the VGM module 304 generates pose estimate data 604 on a target (e.g., the target 160) using a pose estimation algorithm. The forward kinematics data 602 and the pose estimate data 604 are provided to a drift management module 605.

The drift management module 605 uses predefined capture box data 606 including inner capture box 608, middle capture box 610, and total capture box 612.

The drift management module 605 uses each of the capture boxes 608, 610, 612 at a different stage of the free flyer capture operation. Data may be provided to the drifting management module 605 (e.g., from executive runtime 206) indicating that the free flyer capture operation is at a specific stage. The drift management module 605 then uses the drift management algorithm and capture box for that stage.

In an embodiment, the inner capture box 608 is used prior to the visiting vehicle 152 going to free drift, the middle capture box 610 is used while the visiting vehicle 152 is in free drift up to capture, and the total capture box 612 is used post-capture.

The drift management module 605 analyzes the position of the grapple fixture 162 relative to the applicable capture box using the forward kinematics data 602 and the pose estimate data 604. The drift management module 605 detects when the grapple fixture 162 leaves the capture box. Upon detecting the grapple fixture 162 has left the capture box, the drift management module 605 outputs a flag 614.

The flag 614 is sent to the executive runtime 206 to output commands for performing a contingency failed capture operation. This may include executing a script for a contingency failed capture operation. The executive runtime 206 determines and outputs an arm command 616 and a visiting vehicle command 618 to respond to the situation. The arm command 616 is sent to the arm controller 124 and the visiting vehicle command 618 is sent to the visiting vehicle 152.

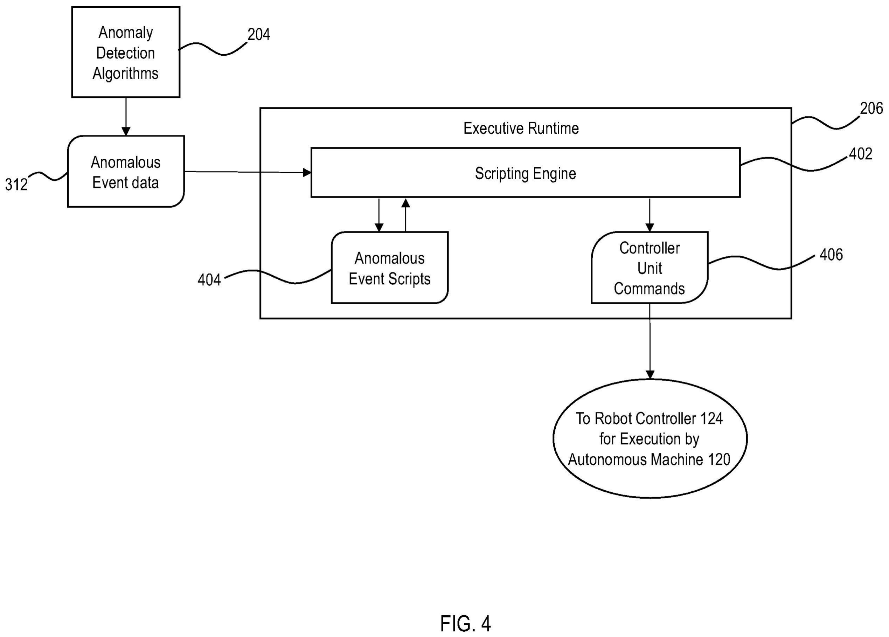

Referring now to Figure 4, shown therein is the executive runtime 206 of Figure 2 in further detail, according to an embodiment.

The executive runtime 206 includes a scripting engine 402. The scripting engine 402 is configured to load and execute anomalous event scripts 404 in response to received anomalous event data 312 from anomaly detection algorithms 204. The scripts 404 include commands and control flow logic written in machine-executable language. In an embodiment, the scripts 404 may be stored as text files outside of the executive control software and only imported at runtime when they are being executed.

The anomalous event scripts 404 encode corrective responses (actions) to the anomalous event data 312 to be executed by the autonomous machine 120.

The anomalous event scripts 404 include branching logic to allow the executive runtime 206 to make decisions and respond to off-nominal situations (i.e., anomalous event data 312) depending on context.

The anomalous event scripts 404 include calls to controller unit commands 406 required to execute the actions. For example, a script 404 for the autonomous machine 120 to ungrapple a grapple fixture may include calls to "prepare to release the grapple fixture" and "release the grapple fixture" commands.

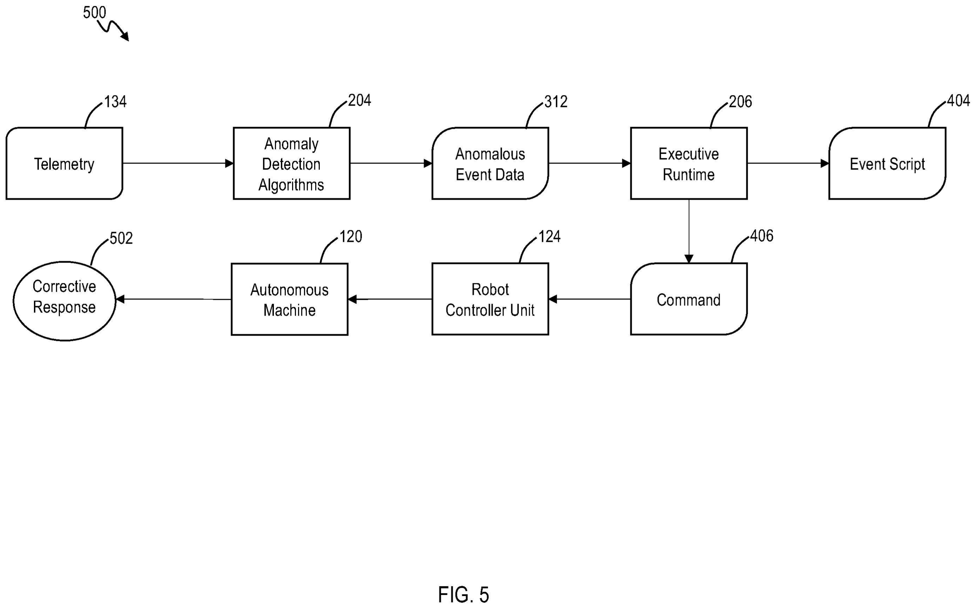

Referring now to Figure 5, shown therein is a data processing flow 500 for autonomous anomaly detection and resolution implemented by the system 100 of Figure 1, according to an embodiment.

The processing flow 500 starts with the collection of telemetry 134 during performance of a robotic task by autonomous machine 120.

The telemetry 134 is provided to anomaly detection algorithm 204 in the executive control software. The anomaly detection algorithm 204 runs during performance of the robotic task. It is to be understood that other anomaly detection algorithms 204 may be running simultaneously.

The anomaly detection algorithm 204 analyzes the received telemetry 134 and detects anomalous events, if present. Anomalies are flagged by the anomaly detection algorithms 204 and sent to the executive runtime 206 as anomalous event data 312.

Based upon the information contained in the anomalous event data 312, the executive runtime 206 identifies an event script 404 the corresponds to the detected anomalous event based upon the information contained in the anomalous event data 312. The event script 404 contains instructions to respond to the detected anomalous event. The event script 404 may include branching logic. The branching logic may include multiple different responses to the detected anomalous event that are dependent on context.

The executive runtime 206 executes the event script 404 and determines a command 406. The command 406 is a directive to a processor or system to perform a particular action or function. The command 406 may include specified parameters.

The command 406 is sent to the robotic controller unit 124 for execution by the autonomous machine 120.

The robotic controller unit 124 controls the autonomous machine 120 to execute a corrective response 502 based on the received command 406.

In some embodiments, the autonomy processing device 128 may use sensor fusion integration for real-time processing of data from multiple sensors to improve anomaly detection accuracy.

In an example, the autonomous machine 120 may be a robotic arm performing a task of grappling a payload. Sensors 122-1 on the autonomous machine 120 include a force moment sensor (FMS). The force moment sensor sends telemetry 134 including sensed forces and moments during attempted grappling to the autonomy processing device 128 for analysis by the RTHM module 306. The RTHM module 306 analyzes the received FMS telemetry and detects an anomaly (e.g., sensed force is off-nominal, higher). The RTHM module 306 flags the anomalous event and provides the anomalous event data 312 to the executive runtime 206. The executive runtime 206 has an anomalous event script 404 that corresponds to this anomalous event. The anomalous event script 404 includes two possible responses: back off from grappling or push harder to grapple. The executive runtime uses the reported anomalous event data 312 and logic in the script 404 to decide which of the two response to take. The executive runtime may determine which action to take based upon a fault signature (e.g., TargetNotFound, ErrorCode9) in the completion status or messages received by the executive control software 202. Executing the response calls a command 406. The executive runtime 206 sends the command 406 to the controller unit 124. The controller unit 124 then controls the autonomous machine 120 to implement the action as corrective response 502 (e.g., back off or push harder).

In another example, the autonomous machine 120 may be a rover traversing a planetary terrain. Sensors 122-1 on the autonomous machine 120 include current sensors for the traction drive motors, encoders for the wheels, and an inertial measurement unit (IMU) mounted to the rover chassis. The autonomous machine 120 is attempting to perform a point turn in the presence of large rocks. The current sensor sends current telemetry 134, the encoders send odometric telemetry 134, and the IMU sends angular velocity and linear acceleration telemetry 134, for analysis by the RTHM module 306. The RTHM module 306 analyzes the received telemetry and detects an anomaly (e.g., current is low in one wheel, odometry is high in the same wheel, and angular velocity is off-nominal, low). The RTHM module 306 flags the anomalous event and provides the anomalous event data 312 to the executive runtime 206. The executive runtime 206 has an anomalous event script 404 that corresponds to this anomalous event. The anomalous event script 404 includes only one possible response: stop motion. The executive runtime 206 sends the command 406 to the controller unit 124. The controller unit 124 then controls the autonomous machine 120 to implement the action as corrective response 502 (e.g., stop attempting to point turn).

Referring now to Figure 7, shown therein is a system 150 for autonomous robotic capture of a free flyer visiting vehicle, according to an embodiment. The system 150 is a space-based robotic system.

The system 150 is an extension or variation of system 100 of Figure 1 applied to the task of autonomous free flyer capture.

The system 150 includes host spacecraft 136 and visiting vehicle 152. The host spacecraft 136 is an example of platform 136 of Figure 1. Components of host spacecraft 136 may be structurally and/or functionally analogous to similar numbered components of Figure 1, and certain details may not be repeated.

The host spacecraft 136 is configured to perform an autonomous capture operation on the visiting vehicle 152 when the visiting vehicle 152 is a free flyer object. The host spacecraft 136 communicates with the visiting vehicle 152 over a communication link 106. In other embodiments, the host spacecraft 136 may be the active vehicle. Generally, the system 100 and the autonomous free flyer capture concepts described herein may apply to any cooperative case in which one or the other of the vehicles is performing proximity operations.

The visiting vehicle 152 includes a communications system 154 for sending and receiving messages and commands (and other data).

Either vehicle 136, 152 may be responsible for positioning the vehicles relative to one another prior to executing the capture operation. In an embodiment, the visiting vehicle 152 includes an onboard processor 156 for processing data and executing commands. The onboard processor 156 includes a guidance, navigation, and control (GNC) system 158. The GNC system 158 is configured to control movement of the visiting vehicle 152. The GNC system 158 performs position determination, attitude determination and control, and station keeping of the visiting vehicle 152. The GNC system 158 may include processing components, actuators, controllers, and sensors. The GNC system 158 can be power on and off. When the GNC system 158 is off, the visiting vehicle 152 becomes a free flyer object.

In an embodiment, the visiting vehicle 152 includes machine vision target 160. The machine vision target 160 (or simply "target") is used to visualize the visiting vehicle 152 and estimate its pose during the capture operation. The design of the target 160 includes one or more pose estimation features that can be imaged and used to estimate pose using image processing techniques.

The visiting vehicle 152 includes a grapple fixture 162 or grapple point. The grapple fixture 162 is a physical interfacing component used to provide a secure connection for a robotic arm (such as robotic arm 120, described below). The grapple fixture 162 is positioned close to the machine vision target 158. In some embodiments, this grapple point may be a natural feature on the vehicle being captured. This could include apogee motor nozzles, launch adapter rings, or hold-down and release components. In other embodiments, the grapple fixture 162 (also referred to as a grapple point or feature) may be a physical feature specially configured for grappling by a robotic end effector or other tool.

Referring now to the host spacecraft 136, the host spacecraft 136 includes a communications system 108 for sending and receiving messages and commands (and other data). The communications system 108 communicates with communications system 154 of visiting vehicle 152 over communication link 106 to facilitate a free flyer capture operation on the visiting vehicle 152. The communication system 108 includes any hardware and software necessary for sending or receiving data over communication link 106. The communication system 108 includes a transmit unit and a receive unit.

The host spacecraft 136 includes a robotic arm 120. Robotic arm 120 is an example of autonomous machine 120 of Figure 1. The robotic arm 120 may be a serial robotic manipulator. The robotic arm 120 may be a 6-DOF robotic arm. The robotic arm 120 is configured to perform autonomous robotic functions and tasks. The host spacecraft 136 is configured to perform a free flyer capture task with the robotic arm 120. The free flyer capture task may be composed of a series or partially ordered sequence of actions. The robotic arm 120 includes a plurality of booms (or links) and joints for articulating the robotic arm 120.

The robotic arm 120 includes an end effector 164 coupled to a free end of the robotic arm 120. The robotic arm 120 manipulates, moves, and positions the end effector 164. The end effector 164 may be an end effector that can be coupled and decoupled from the end of the robotic arm 120 (i.e., picked up and removed).

The end effector 164 is configured to grapple and rigidize grapple fixture 162 attached to the visiting vehicle 152, thereby rigidizing the visiting vehicle 152 to the robotic arm 120.

The host spacecraft 136 includes a robotic arm controller 124. The robotic arm controller 124 executes control software for controlling movement of the robotic arm 120 (e.g., by controlling joint rate and position of the arm joints). The arm controller 124 may implement a functional layer of the autonomous system including function level control software components. Arm controller 124 may be implemented at a single device or across a plurality of devices. For example, arm controller 124 may be implemented partially at a control device local to the robotic arm 120 and partially at an executive control device configured to determine, plan, and schedule robotic operations. Generally, the arm controller 124 controls movement (e.g., rotation) of the arm joints, thereby enabling controlled movement of the robotic arm 120 and ultimately of the end effector 164. The robotic arm 120 and arm controller 124 are communicatively connected and the connection is represented as a hashed line 127 between the arm 120 and arm controller 124. Arm controller 122 may include computing components (e.g., processors, data storage) and other control hardware.

In an embodiment, the arm controller 124 may include manipulator control software, vision software, and end effector control software. The manipulator control software, when executed by a processor of the arm controller 124, controls articulation and movement of the arm 120, such as through controlling the articulation of joints. The manipulator control software may receive sensor data from sensors in or on the arm 120 (e.g., sensors 122) and other input data, process the input data, and generate control instructions based on the processing and send the control instructions to the arm 120 for execution. The vision software, when executed by a processor of the arm controller 124, processes image data acquired by vision components on the host spacecraft 136, such as cameras (e.g., sensors 122). Processing may include, for example, processing image data of machine vision marker 160 on visiting vehicle 152 or determining a pose of the marker 160 or vehicle 152 (e.g., via executing a pose estimation algorithm). The end effector control software, when executed, controls the operation of the end effector 164. This may include operations such as capturing the grapple fixture 162 (e.g., grappling and rigidizing).

The host spacecraft 136 includes a plurality of sensors 122-1, 122-2 disposed on and in the environment of the robotic arm 120 for acquiring telemetry data and visual imagery data about the execution or robotic tasks by the robotic arm 120. This includes sensors 122-1 that are coupled to robotic arm 120 (also referred to as "arm sensors") and sensors 122-2 that are not coupled to the robotic arm 120. The sensors 122 may be of multiple sensor types. Example sensors 122 include actuator control units, camera controllers, motor controllers, and arm controllers. Example sensor data that may be collected includes temperature, voltage, current, force, lidar data. It will be understood that the type and positioning of sensors 122-1, 122-2 may vary in different implementations of system 100.

The sensors 122-1, 122-2 include at least one camera system for imaging an environment that the robotic arm 120 is in. The camera system provides image data to one of or both the arm controller 124 and the autonomy processing device 128 (described further below) that allows the robotic arm 120 to be positioned in the environment (e.g., positioning end effector 164 relative to grapple fixture 162). The camera system also records video data during the performance of the robotic operation by the robotic arm 120. It will be understood that multiple camera systems may be present at different locations (on the robotic arm 120 or independent therefrom) and record images or video of various aspects of the robotic operations.

The sensors 122-1 may include a camera system configured to capture image data of machine vision marker target 160 present on visiting vehicle 152. The machine vision marker may encode information about the marker 160 or vehicle 152 (e.g., identifying information, physical properties). The captured image data may then be processed by a processing device to identify the machine vision marker and/or the visiting vehicle. The camera system may be located on the end effector 164.

In an embodiment, the camera system includes a laser illuminator for illuminating the target 160. The laser has a thin spectral profile with a specific wavelength. The machine vision target 160 is composed of a retroreflective material that is filtered to the same wavelength as the laser. The autonomy processing device 128 (e.g., VGM module 304 of Figure 3) may execute a point to pose photogrammetry algorithm to acquire the target 160. This may have the advantage of running faster and obtaining a signal that is less computationally expensive to process.

The sensors 122-1, 122-2 feed sensor data (telemetry, imagery) 126, 134 to the arm controller 124 and the autonomy processing device 128.

The host spacecraft 136 includes an autonomy processing device 128. The autonomy processing device 128 may also be referred to as an executive robotic control processor. The autonomy processing device 128 is configured to execute encoded process-executable instructions for monitoring and controlling performance of autonomous operations by the robotic arm 120, including free flyer capture.

The autonomy processing device 128 is in communication with arm controller 124 via communication link 130. The autonomy processing device 128 may process data received from arm controller 124. The autonomy processing device 128 is in communication with communication system 108 via communication link 132. The autonomy processing device 128 may process data received from communication system 108, such as messages and commands from visiting vehicle 152. The autonomy processing device 128 receives sensor data (telemetry) 134 from sensors 122-1, 122-2 collected during performance of the free flyer capture task by the robotic arm 120.

The autonomy processing device 128 includes one or more processors for executing software components (or modules) and one or more data storage devices (e.g., memory) for storing data.

The autonomy processing device 128 is configured to perform various tasks autonomously (i.e., automatically without human intervention) such as collision avoidance, target 160 acquisition, detection of off-nominal state in the grapple fixture 162, and visiting vehicle drift monitoring and detection.

It should be noted that embodiments of the system 150 of Figure 7 may include analogous features from other figures shown and described herein, such as the anomaly detection software components 204 and the executive runtime 206 which are part of the autonomy processing device 128. Such analogous features are likewise applicable to the system 150 of the Figure 7.

While the above description provides examples of one or more apparatus, methods, or systems, it will be appreciated that other apparatus, methods, or systems may be within the scope of the claims as interpreted by one of skill in the art.

## Claims

1. A method of autonomous anomaly detection and resolution in a remotely operated device system, comprising:
performing an autonomous task with a remotely operated device disposed on a platform in a space segment;
collecting sensor telemetry or visual imagery with one or more sensors or an imaging system, respectively, in the space segment during performance of the autonomous task;
providing the sensor telemetry or visual imagery to an autonomy processing device in the space segment configured to execute one or more anomaly detection software components;
detecting an off-nominal event in the sensor telemetry or visual imagery with the one or more anomaly detection software modules and sending anomalous event data of the off-nominal event to an executive runtime scripting engine executed by the autonomy processing device;
responding to the anomalous event data by automatically executing an anomalous event response script for the anomalous event data by the executive runtime scripting engine to determine a command, the anomalous event response script including scripting logic encoding at least one corrective response;
sending the command from the autonomous processing device to a controller unit for execution by the remotely operated device; and
executing a corrective response to the anomalous event data by controlling the remotely operated device with the controller unit using the command.

2. The method of claim 1, wherein the anomalous event response script encodes at least two different responses to the anomalous event data, wherein the sensor telemetry or visual imagery includes context data, and wherein the executive runtime scripting engine determines which of the at least two responses to execute based upon the context data and the anomalous event data.

3. The method of claim 2, wherein the at least two different responses include a first response and a second response, wherein the context data includes first context data corresponding to a first context or second context data corresponding to a second context, wherein the executive runtime scripting engines executes the first response when the first context data is received and the second response when the second context is received.

4. The method of claim 1, wherein the one or more anomaly detection software modules include any one or more of the following:
a collision avoidance algorithm configured to detect potential collision situations in real-time;
a vision-guided motion (VGM) module configured to perform vision-guided fine alignment maneuvers to correct pose alignments to a fixed target computed using a machine vision camera system;
a real-time health monitoring (RTHM) module configured to monitor and identify off-nominal performance in the sensor telemetry or visual imagery;
an autonomous sensing of unexpected obstacles (ASUO) module configured to scan an environment in which the autonomous task is being performed, compare the scanned environment against a 3D model of an expected environment, and output the anomalous event data when a difference between the scanned environment and the 3D model is detected.

5. The method of claim 1, wherein the sensor telemetry or visual imagery includes camera telemetry including images from one or more cameras, wherein the one or more anomaly detection software modules include a worksite surveyor module configured to perform automated visual inspection of a current configuration of a worksite to be operated on by the remotely operated device using the imaging system telemetry and output the anomalous event data when the current state of the worksites does not match an expected configuration of the worksite.

6. The method of claim 1, wherein the remotely operated device system is a space robotic system, the remotely operated device is an autonomous robotic device, and the autonomous task is a robotic task.

7. The method of claim 1, wherein the remotely operated device is a robotic arm, and wherein the autonomous task is a grapple task or a release task using the robotic arm.

8. A system for autonomous anomaly detection and resolution in a remotely operated device system, the system comprising:
a remotely controlled device configured to perform an autonomous task;
one or more sensors or imaging systems configured to collect sensor telemetry or visual imagery, respectively, during performance of the autonomous task;
an autonomy processing device comprising:
one or more anomaly detection modules configured to detect an off-nominal event in the sensor telemetry or visual imagery and outputting anomalous event data for the off-nominal event;
a scripting engine configured to:
execute an anomalous event response script corresponding to the anomalous event data to determine a command, the anomalous event response script including scripting logic encoding at least one corrective response;
send the command to a controller device; and
the controller device configured to execute a corrective response to the anomalous event data by controlling the remotely controlled device with the controller device using the command.

9. The system of claim 8, wherein the anomalous event response script encodes at least two different responses to the anomalous event data, wherein the sensor telemetry or visual imagery includes context data, and wherein the executive runtime scripting engine determines which of the at least two responses to execute based upon the context data and the anomalous event data.

10. The system of claim 9, wherein the at least two different responses include a first response and a second response, wherein the context data includes first context data corresponding to a first context or second context data corresponding to a second context, wherein the executive runtime scripting engines executes the first response when the first context data is received and the second response when the second context is received.

11. The system of claim 8, wherein the one or more anomaly detection software modules include any one or more of the following:
a collision avoidance algorithm configured to detect potential collision situations in real-time;
a vision-guided motion (VGM) module configured to perform vision-guided fine alignment maneuvers to correct pose alignments to a fixed target computed using a machine vision camera system;
a real-time health monitoring (RTHM) module configured to monitor and identify off-nominal performance in the sensor telemetry or visual imagery;
an autonomous sensing of unexpected obstacles (ASUO) module configured to scan an environment in which the autonomous task is being performed, compare the scanned environment against a 3D model of an expected environment, and output the anomalous event data when a difference between the scanned environment and the 3D model is detected.

12. The system of claim 8, wherein the sensor telemetry or visual imagery includes camera telemetry including images from one or more cameras of the one or more imaging systems, wherein the one or more anomaly detection software modules include a worksite surveyor module configured to perform automated visual inspection of a current configuration of a worksite to be operated on by the remotely operated device using the camera telemetry and output the anomalous event data when the current state of the worksites does not match an expected configuration of the worksite.

13. The system of claim 8, wherein the sensor telemetry includes any one or more of actuator control unit telemetry, imaging system controller telemetry, motor controller telemetry, motor controller telemetry, robotic arm controller telemetry, temperature telemetry, voltage telemetry, current telemetry, force telemetry, and lidar data.

14. The system of claim 8, wherein the remotely operated device system is a space robotic system, the remotely operated device is an autonomous robotic device, and the autonomous task is a robotic task.

15. The system of claim 8, wherein the remotely operated device is a robotic arm, and wherein the autonomous task is a grapple task or a release task using the robotic arm.
